# EUROPEAN PATENT APPLICATION

(11) **EP 2 811 504 A1**
(43) Date of publication of application: **10.12.2014**
(21) Application number: 13171152.5
(22) Date of filing: 07.06.2013
(51) Int. Cl.: H01H 13/83

(54) **Illuminated keyboard**

(71) Applicant: BlackBerry Limited, Waterloo, ON N2K 0A7 (CA)
(72) Inventor: Lee, Hsin Chin, Waterloo, Ontario N2L 3W8 (CA); Broga, Antanas Matthew, Waterloo, Ontario N2L 3W8 (CA); Singh, Amit Pal, Waterloo, Ontario N2L 3W8 (CA); Chu, Yaya, Waterloo, Ontario N2L 3W8 (CA)
(74) Representative: Patel, Binesh

(57) **Abstract**

A portable electronic device with an illuminated keyboard is disclosed. The device includes a plurality of user input keys arranged to form a keyboard; a reflective surface spaced apart from the keys; and a plurality of light emitters located between the keys and the reflective surface, the light emitters being configured to emit light towards the reflective surface for reflection towards the input keys.

## Description

### FIELD

The present disclosure relates to an illuminated keyboard or keypad, particularly an illuminated keyboard or keypad having push-type input devices, such as may be suitable for use with a portable electronic device.

### BACKGROUND

Providing an illuminated keyboard for use with a portable electronic device allows a user of the portable electronic device to use the keyboard in a dark environment. Examples of such portable electronic devices include laptop computers, tablet computers, netbook computers, portable cordless phones, cellular phones, smartphones, remote control units, digital audio/video players, digital audio/video recorders, navigation devices (such as global positioning system navigators), personal digital assistants (PDAs), electronic gaming devices, digital cameras and numerous other devices. Due to their portable nature, the portable electronic devices are more likely to be used in a dark environment than are devices that are less readily movable from place to place.

### BRIEF DESCRIPTION OF THE DRAWINGS

Reference will now be made, by way of example, to the accompanying drawings which show example embodiments of the present application, and in which:

**Figure 1** illustrates in block diagram form a electronic device suitable for housing a keyboard;

**Figure 2** illustrates in block diagram form an external keyboard device housing the keyboard, suitable for use with the electronic device of **Figure 1****;**

**Figure 3** illustrates an embodiment of an exploded view of a keyboard suitable for use with the electronic device of **Figure 1****;**

**Figure 4** illustrates an embodiment of a top plan view of a circuitry layer suitable for use with the keyboard of **Figure 3****;**

**Figures 5a** and **5b** illustrate two embodiments of a bottom plan view of a light blocking layer suitable for use with the keyboard of **Figure 3****;**

**Figure 6a** illustrates a cross-sectional view of a portion of an embodiment of the keyboard of **Figure 3****;**

**Figure 6b** illustrates a flow chart of an example method for illuminating the keyboard of **Figure 6a****;**

**Figure 7** illustrates a cross-sectional view of a portion of an embodiment of the keyboard of **Figure 3****;**

**Figure 8** illustrates a cross-sectional view of a portion of an embodiment of the keyboard of **Figure 3****;**

**Figure 9** illustrates an embodiment of a top plan view of a circuitry layer having capacitive detecting elements suitable for use with the keyboard of **Figure 3****;**

**Figure 10** illustrates an embodiments of a top plan view of a light blocking layer having capacitive detecting elements suitable for use with the keyboard of **Figure 3****;**

**Figure 11** illustrates a flow chart of a method suitable for use with the keyboard of **Figure 3****;** and

**Figure 12** illustrates a top plan view of the keyboard of **Figure 3****.**

Similar reference numerals may have been used in different figures to denote similar components.

### DESCRIPTION OF EXAMPLE EMBODIMENTS

Keyboard designers consider numerous factors when designing a keyboard, including the weight and thickness of the keyboard, the tactile feel of the keys, and numerous other factors. Additionally, for portable keyboards and for keyboards having a modest power supply, such as battery powered keyboards, the power efficiency of the keyboard system may also be an important consideration.

Illuminated keyboard designers also consider additional factors when designing an illuminated keyboard including the overall brightness of the illumination provided, the uniformity of the illumination provided, and numerous other factors. The keyboard illumination system should ideally not cause a significantly reduced tactile feel of the keys; while at the same time the system should ideally not add significant weight and thickness to the keyboard. Additionally, for portable keyboards and for battery powered keyboards, the power efficiency of the keyboard system including the illuminating components may also be an important consideration.

An illuminated keyboard is disclosed. The disclosed illuminated keyboard may be suited for use as a portable keyboard. The illuminated keyboard may be used as an individual standalone keyboard, or may be incorporated into a housing of a portable electronic device. In both environments, the illuminated keyboard may be powered by a portable power supply, such as one or more rechargeable batteries. The keyboard may include a circuitry layer, a plurality of user input keys arranged to form the keyboard, a light reflecting surface spaced apart from the keys, a light blocking layer located between the keys and the light reflecting surface and having a plurality of apertures (that is, the light blocking layer is structured to define two or more apertures), and a plurality of light emitters configured to emit light in the direction of the light reflecting surface, the light reflecting surface thereby reflecting the light in the direction towards the input keys, through one of the plurality of apertures. (Generally speaking, elements or components may be described as "configured to" perform one or more functions.
In general, a component that is configured to perform a function is suitable for performing the function, or is adapted to perform the function, or is operable to perform the function, or is physically arranged to perform the function or is otherwise capable of performing the function.)

According to an example embodiment is a portable electronic device with an illuminated keyboard. The device includes a plurality of user input keys arranged to form a keyboard; a reflective surface spaced apart from the keys; and a plurality of light emitters located between the keys and the reflective surface, the light emitters being configured to emit light towards the reflective surface for reflection towards the input keys. In some embodiments, the device includes a processor operatively connected to the plurality of light emitters and configured to selectively control the light emitters to selectively illuminate regions of the keyboard.

In some embodiments, the device includes one or more sensors communicating with the processor configured to detect a presence of an input element relative to keyboard, the processor being configured to selectively control the light emitters to selectively illuminate regions of the keyboard that correspond to locations at which the sensors detect the presence of the input element. In some embodiments, the one or more sensors are capacitive detecting elements located proximate to the keyboard.

In some embodiments, the device includes a light sensor communicating with the processor, wherein the processor is configured to selectively control the light intensity of light emitted by the light emitters in dependence on ambient light conditions as detected by the light sensor.

In some embodiments, the device includes a light blocking layer located between the keys and the reflective surface, the light blocking layer having a plurality of apertures. In some embodiments, the light blocking layer has a first side facing the light reflecting surface, wherein the plurality of light emitters are disposed on the first side of the light blocking layer. The reflected light from the light emitters may be reflected in the direction of the keys through one of the plurality of apertures.

In some embodiments, the reflecting surface is formed on a reflective layer having an uneven surface for scattering the light. The reflective may surface cover a plurality of resilient reflective projections, each projection corresponding to a key of the keyboard.

In some embodiments, the device includes a plurality of capacitive detecting elements disposed below the keys. The capacitive detecting elements may be disposed on a side of a circuitry layer or a side of a light blocking layer facing the keys.

According to another example embodiment is a method of illuminating a keyboard of a portable electronic device that has a plurality of user input keys arranged to form a keyboard, a reflective surface spaced apart from the keys, and a plurality of light emitters located between the keys and the reflective surface. The method includes controlling the light emitters to emit light towards the reflective surface, and reflecting the light from the reflective surface towards the input keys.

In some embodiments, the method includes selectively controlling the light emitters to selectively illuminate regions of the keyboard. In some embodiments, the portable electronic device includes one or more sensors for detecting a presence of an input element relative to keyboard and the method includes detecting through the one or more sensors a presence of an input element in a location of the keyboard, and wherein selectively controlling the light emitters to selectively illuminate regions of the keyboard comprises controlling one or more of the light emitters to selectively illuminate the keyboard at the location.

In some embodiments, the method includes comprising reducing an intensity of the one or more light emitters illuminating the location in dependence on time passed since detecting the presence at the location.

According to another example embodiment is a portable electronic device having a keyboard installed in a housing and a processor coupled to the keyboard, the keyboard having a plurality of keys, a plurality of discrete light emitters and a plurality of capacitive detecting elements disposed below the plurality of keys, wherein the processor is configured to: detect a capacitance at a first capacitive detecting element in proximity to a first key; identify a first light emitter associated with the first capacitive detecting element; and emit light from the first light emitter, thereby illuminating the first key.

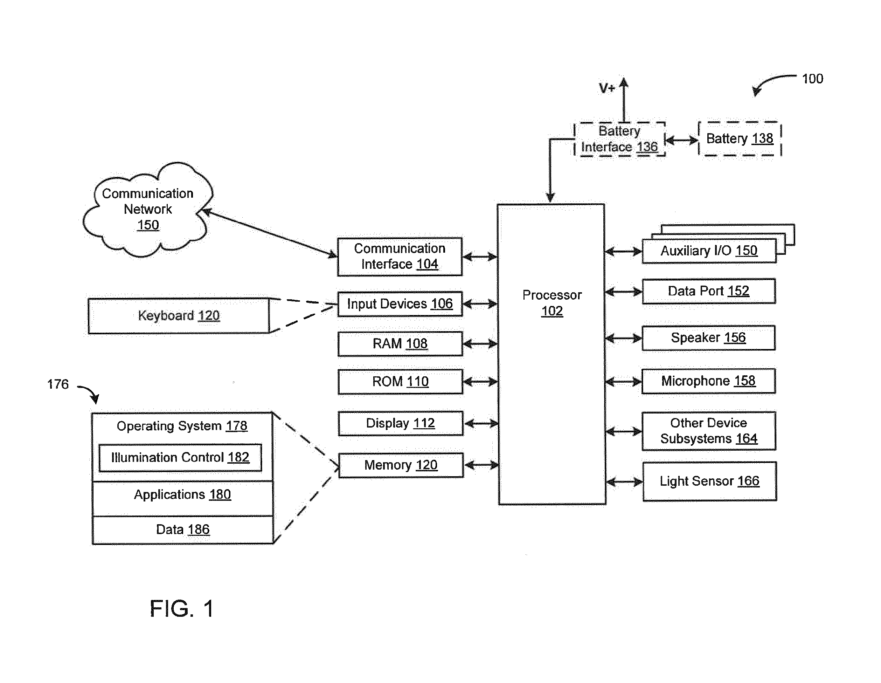

Reference is made to **Figure 1** which illustrates in block diagram form a electronic device 100 suitable for housing a keyboard 120. Examples of the electronic device 100 include, but are not limited to, a mobile phone, smartphone or superphone, tablet computer, notebook computer (also known as a laptop, netbook or ultrabook computer depending on the device capabilities), wireless organizer, personal digital assistant (PDA), electronic gaming device, digital audio/video player, navigation device (such as a global positioning system navigator), portable cordless phone, and digital camera. Electronic device 100 may also include a "standalone" keyboard, that is, a keyboard that includes little or no functionality beyond serving as a data entry device. Some portable electronic devices may be handheld, that is, sized and shaped to be held or carried in a human hand, and typically used while so held.

The electronic device 100 includes a rigid housing (not shown) housing the electronic components of the electronic device 100. The electronic components of the electronic device 100 are mounted on a printed circuit board (PCB). The electronic device 100 includes a processor 102 which controls the overall operation of the electronic device 100. The processor 102 is operatively connected to one or more components, that is, the processor 102 controls or communicates with the components directly or through one or more intermediate components. Communication functions, including data and voice communication, are performed through a communication interface 104. The communication interface 104 receives messages from and sends messages via the communication network 150. The communication interface 104 typically includes a WWAN interface for communication over cellular networks and a WLAN interface for communication over Wi-Fi networks.

The processor 102 interacts with other components, such as one or more input devices 106, RAM 108, ROM 110, a display 112, memory 120 which may be flash memory or any other suitable form of memory, auxiliary I/O subsystems 150, data port 152 such as serial data port (e.g., Universal Serial Bus (USB) data port), speaker 156, microphone 158, light sensor 166, and other device subsystems generally designated as 164. The components of the electronic device 100 are coupled via a communications bus (not shown) which provides a communication path between the various components.

The display 112 may be provided as part of a touchscreen which provides an input device 106, including keyboard 120. The display 112 which together with a touch-sensitive overlay (not shown) operably coupled to an electronic controller (not shown) comprise the touchscreen. User-interaction with the GUI is performed through the input devices 106. Information, such as text, characters, symbols, images, icons, and other items are rendered and displayed on the display 112 via the processor 102.

The input devices 106 include a keyboard 120, and may include control buttons (not shown) such as a power toggle (on/off) button, volume buttons, camera buttons, general purpose or context specific buttons, 'back' or 'home' buttons, phone function buttons, and/or a navigation device. When the display 112 is provided as part of a touchscreen, the various controls may be provided by onscreen user interface elements displayed on the display 112 instead of, or in addition to, physical interface components. The keyboard may be provided instead of, or in addition to, a touchscreen depending on the embodiment. At least some of the control buttons may be multi-purpose buttons rather than special purpose or dedicated buttons.

The processor 102 operates under stored program control and executes software modules 176 stored in memory, for example, in the persistent memory 120. The persistent memory 120 also stores data 186 such as user data. As illustrated in **Figure 1****,** the software modules 176 comprise operating system software 178 and software applications 180. The operating system software 178 include firmware for controlling various components of the electronic device 100, including illumination control software 182 for controlling the illumination of the keyboard 120, the display 112 and other components fitted will illumination systems. The software modules 176 or parts thereof may be temporarily loaded into volatile memory such as the RAM 108. The RAM 108 is used for storing runtime data variables and other types of data or information. Although specific functions are described for various types of memory, this is merely one example, and a different assignment of functions to types of memory could also be used.

The communication interface 104 may include a short-range wireless communication subsystem (not shown) which provides a short-range wireless communication interface. The short-range wireless communication interface is typically Bluetooth® interface but may be another type of short-range wireless communication interface including, but not limited to, an IR interface such as an IrDA interface, an IEEE 802.15.3a interface (also referred to as UWB), Z-Wave interface, ZigBee interface or other suitable short-range wireless communication interface.

The electronic device 100 also includes a power source, depicted for purposes of illustration as a battery 138, which is typically one or more rechargeable batteries that may be charged, for example, through charging circuitry coupled to a battery interface such as the serial data port 152. The battery 138 provides electrical power to at least some of the electrical circuitry in the electronic device 100, and the battery interface 136 provides a mechanical and electrical connection for the battery 138. The battery interface 136 is coupled to a regulator (not shown) which provides power V+ to the circuitry of the electronic device 100, including the keyboard 120.

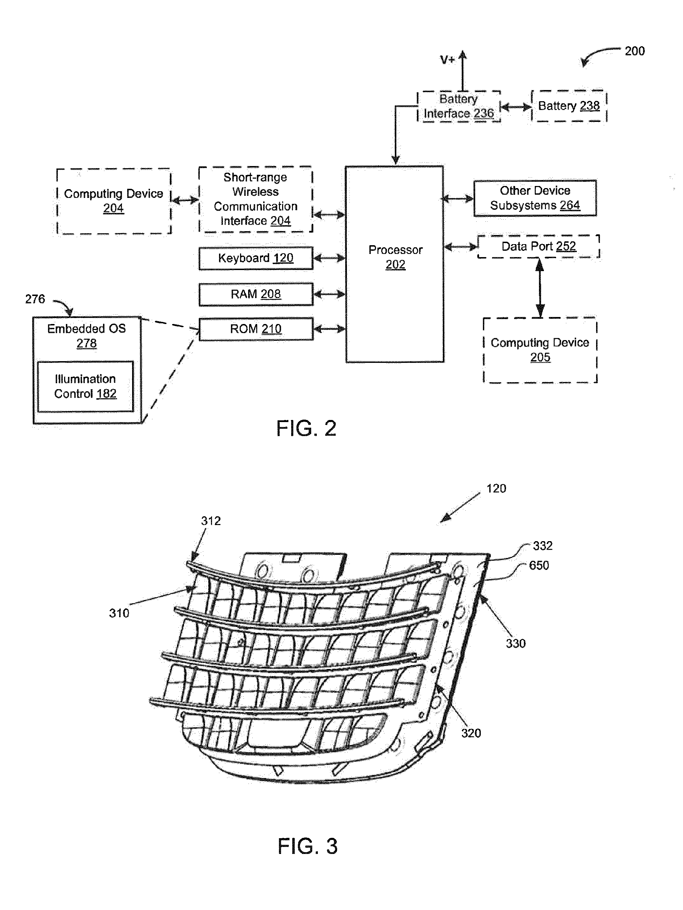

As noted above, electronic device 100 may also include a "standalone" keyboard, that is, a keyboard that includes little or no functionality beyond serving as a data entry device. In this regard, reference is next made to **Figure 2** which illustrates in block diagram form an external standalone keyboard device 200, that includes a keyboard 120 and is suitable for use with an electronic device such as device 100. Thus, in some embodiments, the electronic device 100 will have an onboard keyboard 120 housed in a housing thereof. In other embodiments, the electronic device 100 will not have a keyboard 120 housed in a housing thereof, but may connect to an external keyboard 200 device through a physical or wireless interface. In some embodiments, the electronic device 100 is a standalone keyboard device such as device 200. In some embodiments, an external keyboard device 200 can be used to supplement an onboard keyboard. As discussed herein, a keyboard may include a plurality (two or more) of push-type input devices, which may be called by names such as buttons or switches or depressible indicators, but which will be referred to herein as keys (or input keys). The keys may be arranged in any fashion to form a keyboard 200. Further, the term keyboard will be used herein to include any of several kinds of input devices, such as keypads, control panels and other panels or arrangements of keys.

The external keyboard 200 includes a rigid housing (not shown) housing the electronic components of the external keyboard 200. The electronic components of the external keyboard 200 are mounted on a printed circuit board (PCB). The external keyboard 200 includes a processor 202 which controls the overall operation of the external keyboard 200. The processor 202 is operatively connected to one or more components, that is, the processor 202 controls or communicates with the components directly or through one or more intermediate components.

Communication functions are performed through a short-range wireless communication interface 204 and data port 252. The electronic device 100 may connect to the external keyboard 200, as shown in **Figure 2****,** via the data ports 152 and 252, such as a USB connection or Firewire™ connection, or a short-range communication interface 104 and 204, such as a Bluetooth™ connection, Wi-Fi Direct™ or other wireless communication protocol.

The processor 202 interacts with other components, such as the keyboard 120, RAM 208, ROM 210, data port 252 such as serial data port (e.g., Universal Serial Bus (USB) data port), and other device subsystems generally designated as 264. The components of the external keyboard 200 are coupled via a communications bus (not shown) which provides a communication path between the various components.

The processor 202 operates under stored program control and executes software modules 276 stored in memory, for example, in the ROM 210. As illustrated in **Figure 1****,** the software modules 176 include embedded operating system software 278. The embedded operating system software 278 includes firmware for controlling various components of the external keyboard 200, including illumination control software 182 for controlling the illumination of the keyboard 120. The software modules 276 or parts thereof may be temporarily loaded into volatile memory such as the RAM 208. The RAM 208 is used for storing runtime data variables and other types of data or information, including a buffer of keystrokes received via the keyboard 120. Although specific functions are described for various types of memory, this is merely one example, and a different assignment of functions to types of memory could also be used.

The communication interface 204 may include a short-range wireless communication subsystem (not shown) which provides a short-range wireless communication interface. The short-range wireless communication interface is typically Bluetooth® interface but may be another type of short-range wireless communication interface including, but not limited to, an IR interface such as an IrDA interface, an IEEE 802.15.3a interface (also referred to as UWB), Z-Wave interface, ZigBee interface or other suitable short-range wireless communication interface.

The external keyboard 200 also includes a power source, depicted as a battery 238, which is typically one or more rechargeable batteries that may be charged, for example, through charging circuitry coupled to a battery interface such as the serial data port 252. The battery 238 provides electrical power to at least some of the electrical circuitry in the external keyboard 200, and the battery interface 236 provides a mechanical and electrical connection for the battery 238. The battery interface 236 is coupled to a regulator (not shown) which provides power V+ to the circuitry of the external keyboard 200, including the keyboard 120.

Reference is now made to **Figure 3****,** illustrating an exploded view of the keyboard 120 in perspective. The keyboard 120 is made of multiple layers stacked on top of one another, including keys 310, light blocking layer 320, and a circuitry layer 330 having a light reflecting surface 332. For convenience, concepts such as "top," "bottom," "upper," "lower," "above," "below," "up," "down" and the like may be thought of from the typical user's point of view. The surfaces of the keys 310 with which the user interacts (which will be called striking surfaces) would be upper (or top) surfaces of the key 310, for example, and a user depressing such keys would be moving them in a downward direction. Similarly, the circuitry layer 330 would be below the light blocking layer 320 and the keys 310. The light reflecting surface 332 may for example be applied directly to circuit layer 330 or could be the surface of a discrete light reflecting (or, used herein interchangeably, reflective) layer 650 located on or above the circuit layer 330 and spaced apart from the keys 310. In this context, the reflective surface 332 (or a reflective/reflecting layer on which the surface resides) being spaced apart from the keys refers to a physical separation between the reflective surface and the keys. The space or gap between the reflective surface and the keys may include a transparent or translucent material or substance, including but not limited to air. There is no necessary or maximum or minimum or precise measurement of that physical separation, and the amount of separation may vary from device to device or from model to model. Reflecting layer 650 may be spaced apart from the keys 310 by, for example, being disposed adjacent the circuitry layer 330. The light blocking layer 320 is located between the keys 310 and the light reflecting surface 332. Put another way, from a typical user's point of view, the striking surfaces of the keys 310 are closer to the user than the light reflecting surface 332, and the light blocking layer 320 is closer to the user than the light reflecting surface 332 but not as close as the striking surfaces of the keys 310. It may also be said that the light-blocking layer 320 might be located between the keys 310 and the light reflecting surface 332 in the sense that the light-blocking layer 320 is spatially interposed between the light reflecting surface 332 and at least a part of the key 310; the light-blocking layer 320 need not be spatially interposed between the light reflecting surface 332 and the entirety of the keys 310. Also shown in **Figure 3** are optional bars 312, which fill a gap between the rows of keys 310.

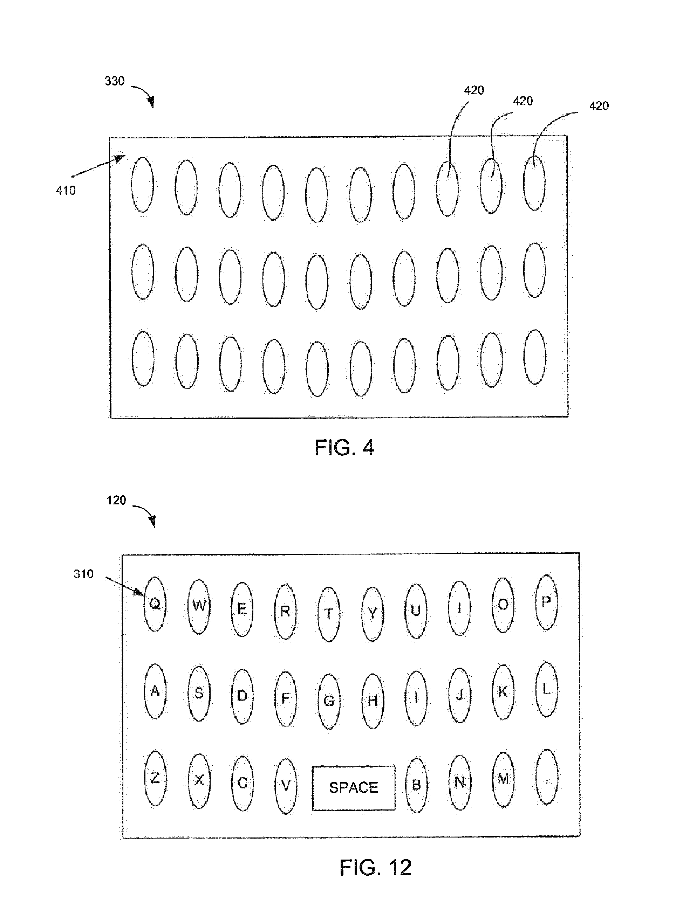

A top plan view of an embodiment of the circuitry layer 330 is shown in **Figure 4****.** The circuitry layer 330 is made a Printed Circuit Board (PCB) 410, which may be made of a rigid or flexible material. The PCB is coupled to the processor 102 or 202 via a communication interface such as a bus (not shown). A number of electrical contacts 420 are disposed on a side of the PCB 410 facing the keys 310. Each electrical contact 420 corresponds with a key of the keys 310. When the circuit associated with one of the electrical contacts 420 is closed, the processor 102 of the electronic device 100 or the processor 202 of the external keyboard 200 will receive a signal indicating that the key has been pressed. The OS 178 or the embedded OS 278 will then determine which character corresponds with the key that has been pressed and add the character to the keyboard buffer in memory.

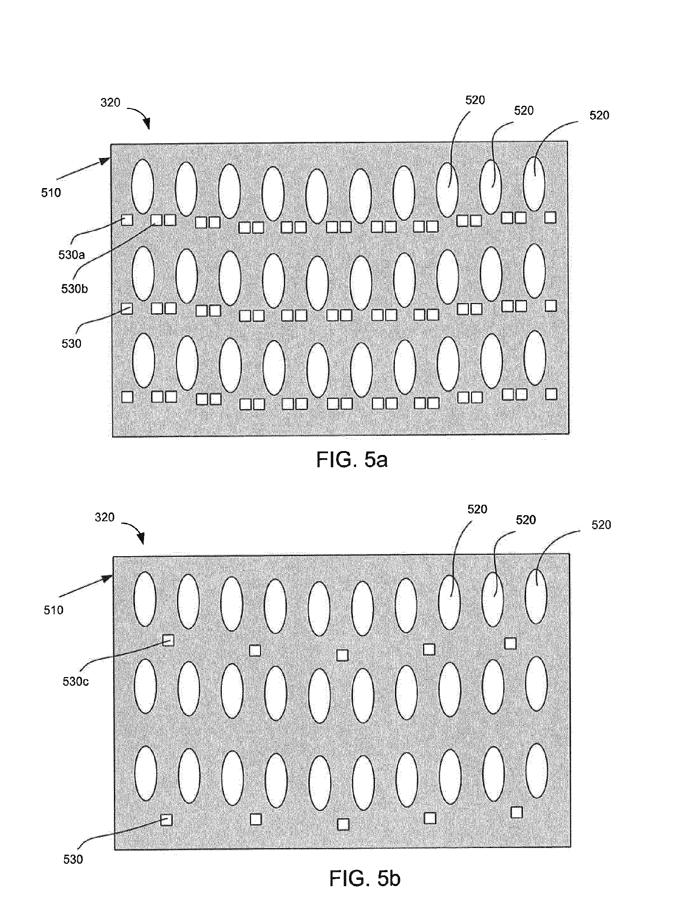

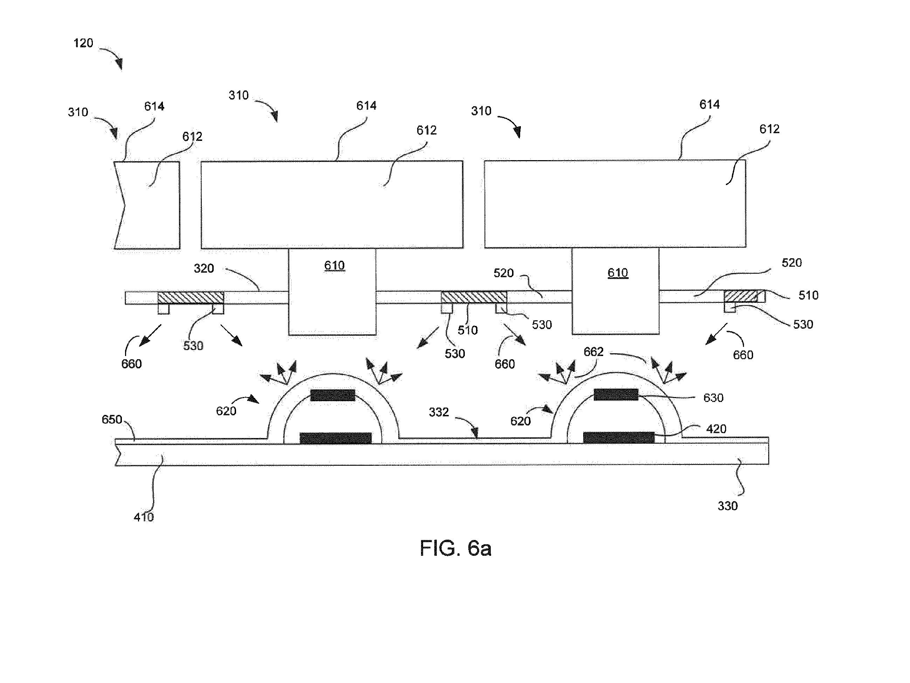

The light blocking layer 320 may be located between the keys 310 and the light reflecting surface 332. The light blocking layer may have a bottom side facing the light reflecting surface 332 and an upper side facing the keys 310. A plan view of different embodiments of the bottom side of the light blocking layer 320 is shown in **Figures 5a** and **5b****.** The light blocking layer 320 is located between the keys 310 and the light reflecting surface 322. In at least some examples, the light blocking layer 320 is made of a dark color, such as black and helps to reduce light leakage into unwanted regions of the keyboard 120. The light blocking layer 320 thus provides the ability for an illumination designer to control where the light may exit the keyboard 120, to achieve a desired lighting pattern. For example, as best seen in **Figure 6a****,** light blocking layer 320 prevents light rays from reflecting outwardly from between two adjacent keys 310. However, the light blocking layer 320 may not be required in some embodiments.

The light blocking layer 320 has a light block 510 having apertures, including apertures 520, such that each aperture corresponds with a key of the keys 310, thereby allowing the keys to engage the electrical contacts 420 mounted on the PCB 410. As used herein, apertures 520 allow the passage of light. Apertures 520 may be empty spaces (e.g., filled with air) or may include one or more substantially transparent components (such as transparent plastic). In example embodiments, a discrete light emitter 530 is disposed proximate to at least some of the apertures 520 on the bottom side of the light blocking layer, the bottom side facing the light reflecting surface. In the embodiment shown in **Figure 5a****,** two light emitters 530 are placed proximate each aperture 520, one on each side of the aperture 520. This arrangement thus allows for illumination control software 182 to control the lighting of each key 310 individually, however other arrangements are possible. Accordingly, each key 310 is a region of the keyboard 120, whereby the illumination of each region can be selectively and individually controlled by the devoce processor operating under the control of illumination control software 182. In the embodiment shown in **Figure 5b****,** each four keys 310 of the upper two rows share one light emitter 530 and each two keys of the lower row share one light emitter 530. Accordingly, each four keys of the upper two rows and each two keys of the lower row is a respective region of the keyboard 120, whereby each region can be selectively and individually controlled by illumination control software 182. The reduced number of light emitters 530 used in **Figure 5b** relative to those used in **Figure 5a** also allows for reduced cost, weight and power consumption. The arrangement of light emitters 530 is thus suitable for modification to achieve the desired illumination characteristics.

The light emitters 530 can be any of a light emitting diode (LED), an organic light emitting diode (OLED) or other suitably sized and functional light emitter; whether a particular light emitter is suitable may be a function of (for example) the light intensity of the emitter, or its color, or its power requirements/consumption, or its size, or the heat it emits, or any combination thereof. The light emitters 530 are electrically coupled to the PCB 410, for example using a second flexible PCB (not shown), to receive power and control signals via the processor 102 or 202, such that illumination control software 182 can control the light emitters 530.

Reference is now made to **Figure 6a****,** showing a cross-sectional view of a portion of an embodiment of the keyboard 120. Shown in **Figure 6a** are keys 310 mounted on top of the other layers 320, 650, 330 such that each key provides a striking surface for a user to strike the keys. Each key of the keys 310 includes a key cap 612. Each key has an upper layer providing a striking surface 614, and a key plunger 610. Each of the key plungers 610 has a lower layer for interfacing with a respective electrical contact 420 on the circuitry layer 330. The keys 310 are arranged adjacent one another in adjacent rows. For example, one arrangement of the keys 310 may be such that three rows of keys are provided, each row having 10 adjacent keys. Each of the keys 310 may be built in different sizes and shapes. In some embodiments, at least one key is an elongated key, having an elongated key cap 612 and two or more key plungers 610 and may be a space bar.

In example embodiments, the upper striking surface 614 has a character or other indicia printed on it to indicate to a user which character the key 310 is associated with. In some embodiments, the key cap 612 is made of two portions; a first portion shaped in the shape of the character and made of a transparent or translucent material, while the second portion surrounds the first portion and is a made of a dark light blocking material. This allows light to illuminate in the shape of the character. In other embodiments, the key cap 612 is made of one light blocking material having the character printed on the striking surface 614. Light is then only allowed to illuminate from the sides of the key cap 612, for example, by adjusting the size of the apertures 520 in the light blocking layer 320 to permit light to illuminate outwardly from in between two adjacent keys.

The light reflecting layer 650 is located between the circuitry layer 330 and the keys 310, as is best shown in **Figure 6a****.** The light reflecting layer 650 has an upper light reflecting surface 332, facing the keys 310. The reflecting surface 332 may be a mirror surface, or have a color suited for reflecting light, such as white or silver. The reflective surface 332 may scatter or diffuse light as well as reflect it. In some embodiments, the reflective surface 332 is an uneven surface formed on light reflecting layer 650 which causes the light rays emitted from the light emitters 530 to scatter to help generate a more uniform illumination. In some embodiments, the light reflecting layer 650 has resilient projections 620. The reflective surface 332 may extend over the projections 620, that is, the projections 620 may have a light reflecting upper surface, facing the keys 310. The projections 620 may be dome shaped as shown in **Figure 6a****,** but other shapes are possible. The dome shape can have an angle of curvature varying from 5 degrees to 90 degrees, depending on the embodiment. In some embodiments, the reflective surface 332 may reflect a beam of incident light in several directions, while directing most of the reflected light in or near a particular direction. A reflective surface 332 may be created by application of a reflective element, such as by paint or reflective tape, to less- or non-reflective surface, or reflectivity may be built into the surface by techniques such as texturing or polishing. A single surface may have a reflective surface (that is, at least one region that functions as a reflecting surface) and a non-reflective surface (that is, at least one region that is less- or non-reflecting); it may be similarly said that that a reflective layer has a reflecting surface.

Each projection 620 corresponds to a key 310. As shown in **Figure 6a****,** the key plunger 610 interfaces with a resilient projection 620 of the light reflecting layer 650. The projection 620 may be covered by the reflective surface 332. The projection 620 is created, for example, using a deformable (or resilient or flexible) spring-like metal or other material that projects in the direction of a key plunger 610 when it is in a relaxed state. Each projection 620 interfaces with one key plunger 610 via an upper surface of the projection. Each projection 620 also has an electrical contact 630 mounted on a lower surface of the projection. When the key cap 612 is stuck, the force will cause the plunger 610 to move in the direction of the projection 620. The plunger 610 will hit the upper surface of the projection, thereby causing the projection 620 to deflect in the direction of the PCB 410. When the striking force is sufficient, the deflection will cause the electrical contact 630 mounted on the lower surface of the projection to touch an electrical contact 420 of the PCB 410, thereby closing a circuit associated with the key 310. The projection 620 will exert an opposing force in the direction of the key plunger 610, such that when the striking force is removed, the projection 620 returns to its original state. Furthermore, the tactile feel of the key 310 can be adjusted by modifying the force required to deflect the projection 620.

When a light emitter 530 is turned on, the light emitter 530 emits light toward or in the direction of the light reflecting surface 332 as indicated by arrows 660; the light emitter 530 ordinarily does not emit significant amounts of light in the opposite direction, that is, in the direction of the key caps 612; or the light-blocking layer 320 blocks the light emitter 530 from emitting light in the direction of the key caps 612. The light emitters 530 are spaced apart from the light reflecting surface 332, and are located between the keys 310 and the light reflecting surface 332. As shown in **Figure 6a****,** the light emitters 530 are located between the keys 310 and the reflective surface 332, that is, the light emitters 530 are spatially interposed between the light reflecting surface 332 and at least a part of the key 310. In the example of **Figure 6a****,** the light emitters 530 are not spatially interposed between the light reflecting surface 332 and the key plunger 610. (Similarly, **Figure 6a** shows that the light-blocking layer 320 is spatially interposed between the light reflecting surface 332 and part of the key cap 612, but not between the light reflecting surface 332 and the key plunger 610.) As will be described and illustrated below, the light-blocking layer 320 might be located between the keys 310 and the light reflecting surface 332 in the sense that the light-blocking layer 320 is spatially interposed between the light reflecting surface 332 and at least a part of the key 310; the light-blocking layer 320 need not be spatially interposed between the light reflecting surface 332 and the entirety of the key 310. The light reflecting surface 332 reflects the emitted light, as indicated by arrows 662, in the direction of one or more of the keys 310. In one embodiment, the light emitter 530 emits light in the direction of the projection 620. The shape and color of the upper surface of the projection 620 cause the light 662 to reflect toward one or more keys 310. The reflected light from the light emitters is reflected in the direction of the keys 310, and may pass through an aperture of the plurality of apertures 520 or the bottom surface of the key cap 612 and the bottom surface of the key plunger 610. Additionally, light rays from the light emitter 530 may reach other areas of the light reflecting layer 650. The other areas light reflecting layer 650 may also reflect light in the direction of the aperture 520, the bottom surface of the key cap 612 and the bottom surface of the key plunger 610. The light reflecting layer 650 may also scatter the emitted light rays, thereby helping to create a more uniform illumination. In this way, the light emitters 530 and one or more reflective surfaces 332 are configured to illuminate the keys 310 with reflected light. Colloquially speaking, the light emitters 530 emit light downward or away from the keys 310, and the emitted light is reflected back upward toward the keys 310, thereby illuminating the keys 310.

In some embodiments, the key cap 612 also functions as an optical guide, further directing the light reflected to a bottom surface of the key cap 612, facing the light reflecting layer 650, to the striking surface 614. In some embodiments, the key plunger 610 is an optical guide, further directing the light reflected to a bottom surface of the key plunger 610, facing the light reflecting layer 650, to the key cap 612 and the striking surface 614.

In some embodiments, the light from the light emitters 530 does not need to be diffused using an additional optical guiding layer. An optical guiding layer adds an additional layer in the keyboard 120, increasing both the thickness and the weight of the keyboard 120, thereby reducing the portability of the keyboard 120. Additionally, when an additional optical guiding layer is not used it is possible to provide greater luminance at the keys 310 from a light emitter 530; as when an optical guiding layer is used, some light directed into the optical guiding layer may not be diffused out of the optical guiding layer and in the direction of the keys 310, including the bottom surfaces of the key plunger 610 and the key cap 612. As such, when an additional optical guiding layer is not used, the power efficiency of the keyboard 120 may be enhanced by using lower powered light emitters 530, or by simply driving the light emitters 530 at a more efficient state requiring less current.

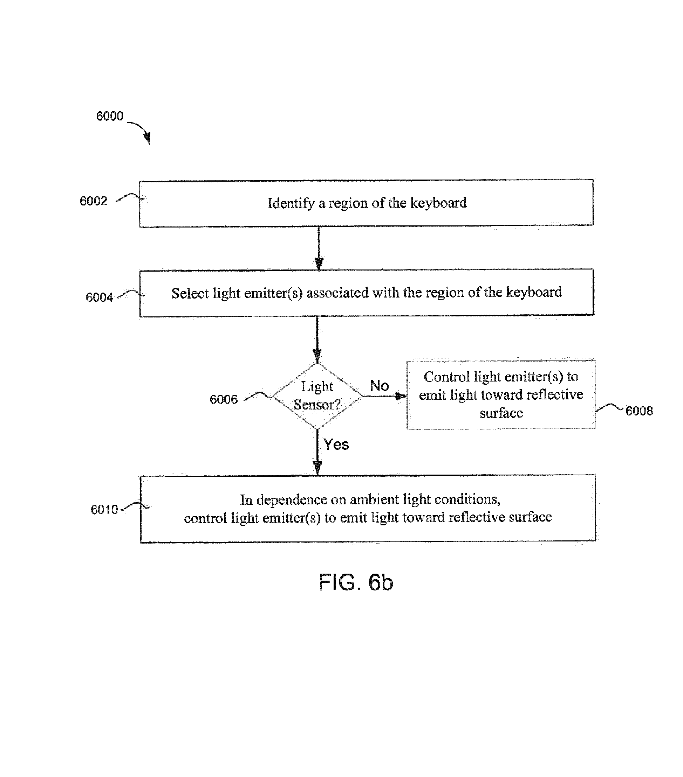

Reference is now made to **Figure 6b****,** showing a flow chart of an example method 6000, implemented by a processor operatively connected to the plurality of light emitters 530, such as processor 102 or 202, to selectively illuminate regions of the keyboard 120 of **Figure 6a****.**

As previously explained, different regions of the keyboard 120 can be selectively illuminated, under control of the processor. Each light emitter of the light emitters 530 may illuminate one or more regions of the keyboard 120. For example, with reference to **Figure 5a****,** each light emitter 530 only illuminates one key 310 of the keys of the keyboard. Accordingly, each key can be considered to be a separate region of the keyboard. However, with reference to **Figure 5b****,** each light emitter 530 illuminates a group of two or four keys (depending on the row). Accordingly, each of the two or four keys can be considered to a region of the keyboard.

At step 6002 of method 6000, the processor 102 or 202 identifies a region of the keyboard to selectively control the light emitters to selectively illuminate regions of the keyboard. For example, in some applications, the processor may globally identify that all regions are to be illuminated - for example, once a key is pressed, then all keyboard regions are selected for illumination. Alternatively, only a keyboard region associated with the pressed key may be selected for illumination. In some example embodiments the processor may use the illumination patterns of the keys 310 to indicate information to a user of the keyboard 120 that supplements or replaces information that otherwise might be presented on a display 112. For example, with reference to **Figure 5b****,** the processor can selectively illuminate a particular key to provide a hint of a short-cut associated with the particular key. The hint may be presented upon detecting that a user of the electronic device 100 is performing an action multiple times, the action having a short-cut key associated therewith. For example, when scrolling a document, the user may wish to reach the "top" of the document. The short-cut key associated therewith may be the key "T". Accordingly, it may be advantageous to indicate this to the user by selectively illuminating the key associated with the letter "T". Other methods to identify a region of the keyboard 120 are also possible, some of which are explained in greater detail below.

The processor 102 or 202 may then select one or more light emitters 530 associated with the identified region of the keyboard at 6004. For example, with reference to **Figure 5a****,** if the identified region is the top left key, then the processor may select the light emitters 530a and 530b. However, with reference to **Figure 5b****,** if the identified region includes the top left key, then the processor may select the light emitter 530c. A table correlating each light emitter with respective regions can be stored in the memory 120, and retrieved by the processor to identify the light emitter(s) associated with the identified region of the keyboard 120.

In some example embodiments, keyboard illumination may be controlled in dependence on ambient light conditions. In this regard, at 6006, the processor 102 or 202 determines if a light sensor 166 is to be used in controlling the light emitters 530. When the processor determines that no light sensor 166 is to be used, for example, due to the feature being turned off, or due to a lack of a light sensor, the processor will, at 6008, control the selected light emitters 530 to emit light toward the light reflecting surface 332. The emitted light is then reflected towards the input keys 310 at the identified region. However, if the light sensor 166 is to be used, the processor will, at 6010, control the selected light emitters 530 to emit light toward the light reflecting surface 332 in dependence on the ambient light conditions, as detected by the light sensor 166. For example, the intensity of the emitted light may be reduced when the ambient light is low, and the intensity increased when the ambient light is high. The emitted light will also be reflected towards the input keys 310 at the identified region.

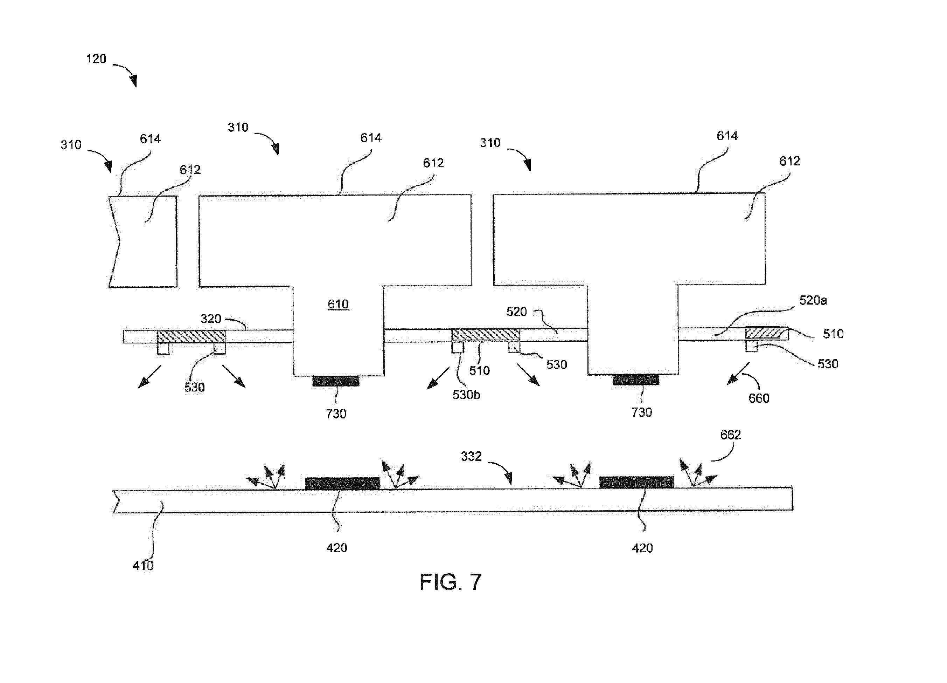

Reference is now made to **Figure 7****,** showing a cross-sectional view of a portion of a further example embodiment of the keyboard 120. The method 6000, of **Figure 6b****,** may also be implemented by a processor operatively connected to the plurality of light emitters 530, such as processor 102 or 202, to selectively illuminate regions of the keyboard 120 of **Figure 7****.** In this embodiment, electrical contacts 730 collectively are placed at the bottom surface of each key 610. Each electrical contact 730 interfaces with an electrical contact 420 of the circuitry layer 330. When the key cap 612 is stuck, the force will cause the plunger 610 and the electrical contact 730 to move in the direction of the electrical contact 42a, causing the two contacts to touch one another, thereby closing the circuit associated with the key 310.

The light reflecting surface of **Figure 7** is a reflective surface 332 on the upper side of the circuitry layer 330, facing the keys 310, as shown in **Figure 7****.** The reflective surface 332 may for example be a mirror surface, or a paint or covering having a color suited for reflecting light, such as white or silver. In one embodiment, the light emitter 530 emits light 660 in the direction of reflective surface 332. The reflective surface 332 causes the light to reflect 662 in the direction of the aperture 520, the bottom surface of the key cap 612 and the bottom surface of the key plunger 610. The light reflecting layer 650 may also scatter the emitted light rays. Further, the reflective surface 332 may have a range of reflection, reflecting some light 662 generally in the direction of the aperture 520 but scattering some light in other directions as well.

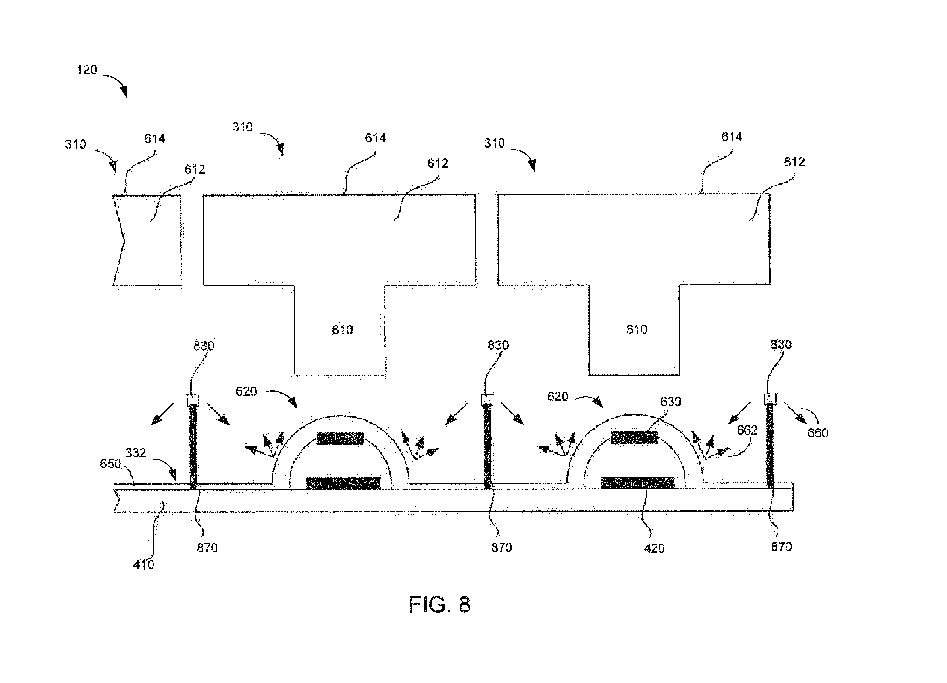

Reference is now made to **Figure 8****,** showing a cross-sectional view of a portion of yet another example embodiment of the keyboard 120. The method 6000, of **Figure 6b****,** may also be implemented by a processor operatively connected to the plurality of light emitters 530, such as processor 102 or 202, to selectively illuminate regions of the keyboard 120 of **Figure 8****.** Elongate projections 870 are fixed to the PCB 410 and coupled to the processor 102 or 202 via the PCB 410. Fixed at an upper surface of each of the projections 870 are respective light emitters 830. The projections 870 protrude upwardly from the PCB 410 at a height sufficient to allow for light 660 that is projected towards reflective surface 332 from the light emitters 830 to be reflected upwardly (as represented by arrows 662) in the direction of the keys 310. Similarly to other embodiments, when a light emitter 830 is turned on, the light emitter 830 emits light 660 in the direction of the light reflecting surface 332 of layer 650. The light reflecting surface 332 thereby reflects the emitted light in the direction 662 of one or more of the keys 310. In one embodiment, the light emitter 830 emits light in the direction of one or more respective projections 620. The shape and color of the upper surface of the projection 620 cause the light to reflect in the direction 662 of the bottom surface of the adjacent key cap 612 and the bottom surface of the respective key plunger 610. Additionally, light rays from the light emitter 830 may reach other regions of the light reflecting layer 650. The other regions of light reflecting layer 650 may also reflect light in the direction the bottom surface of the key cap 612 and the bottom surface of the key plunger 610. The light reflecting layer 650 may also scatter the emitted light rays. In some embodiments, a light reflector is placed at the bottom of each key 310; thus reflecting light emitted from the light emitters 830 towards the light reflecting surface 332 of layer 650, thereby generating a more uniform illumination pattern.

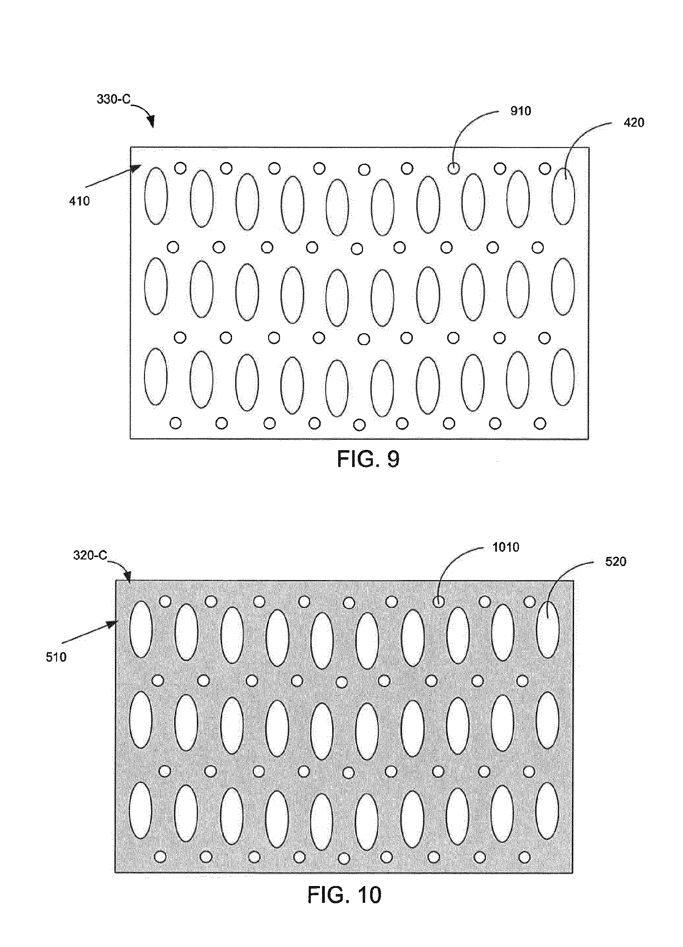

Reference is now made to **Figure 9****,** showing a top plan view of an embodiment of a circuitry layer 330-C. The circuitry layer 330-C is suitable for use with the keyboard 120 and may replace circuitry layer 330 shown in **Figure 4****.** Each electrical contact 420 corresponds with a key of the keys 310. Circuitry layer 330-C also has number of presence sensors in the form of capacitive detecting elements 910, which are located proximate to (close to, on, near or at) one or more keys 310 of the keyboard. In **Figure 9****,** the capacitive detecting elements 910 are disposed on the upper side of the circuitry layer 330-C, facing the keys 310, such that the capacitive detecting elements 910 are disposed below the keys 310 when the circuitry layer 330-C is assembled in the keyboard 120. In one embodiment, the capacitive detecting elements 910 are made of a tin-doped indium oxide (ITO); however, other metals and conductive materials can be used.

The method 6000, of **Figure 6b****,** may also be implemented by a processor operatively connected to the plurality of light emitters 530, such as processor 102 or 202, to selectively illuminate regions of a keyboard 120 using the circuitry layer 330-C of **Figure 9****.** The presence sensors of the circuitry layer 330-C, such as the capacitive detecting elements 910 of the circuitry layer 330-C may communicate with the processor when the presence of an input element relative to the keyboard is detected; thereby allowing the processor to identify a region of the keyboard for illumination.

The number and arrangement of the capacitive detecting elements 910 may vary in different embodiments, depending on the sensitivity and size of the capacitive detecting elements 910, and other design parameters associated with the keyboard 120. The capacitive detecting elements 910 are communicatively coupled to the processor 102 or 202 via the PCB 410. Each capacitive detecting element 910 is suited to detect any changes in capacitance within its sensitivity region. The capacitance within one of the capacitive detecting element's 910 sensitivity region may change when an input element, such as user's finger, is in proximity of a key 310 of the keyboard 310. The user thus does not need to apply any force on the key 310 for the processor 102 or 202 to detect the user.

Reference is now made to **Figure 10****,** showing a top plan view of an embodiment of a light blocking layer 320-C. The light blocking layer 320-C is suitable for use with the keyboard 120 and may replace light blocking layer 320 shown in **Figure 5a or 5b****.** The light blocking layer 320-C has a light block 510 having apertures 520 disposed in the light block 510, thereby allowing the keys 310 to engage the electrical contacts 420 mounted on the PCB 410. Light blocking layer 320-C has a number of presence sensors in the form of capacitive detecting elements 1010 disposed on the upper side of the light block 510, facing the keys 310, such that the capacitive detecting elements 1010 are between the keys 310 and the light reflecting surface 332 when the light blocking layer 320-C is assembled in the keyboard 120. On the other side, as shown previously, a plurality of discrete light emitters 530 may be disposed. The number and arrangement of the capacitive detecting elements 1010 may vary in different embodiments, depending on the sensitivity and size of the capacitive detecting elements 1010, and other design parameters associated with the keyboard 120. The presence sensors (such as capacitive detecting elements 1010 in the present embodiment) are communicatively coupled to the processor 102 or 202 via the PCB 410 and are configured to detect the presence of an input element such as a finger or stylus. Each capacitive detecting element 1010 is suited to detect any changes in capacitance within its sensitivity region. The capacitance within one of the capacitive detecting element's 1010 sensitivity region may change when an input element, such as a user's finger, is in proximity of a key 310 of the keyboard 310. The user thus does not need to apply any force on the key 310 for the processor 102 or 202 to detect the user.

The method 6000, of **Figure 6b****,** may also be implemented by a processor operatively connected to the plurality of light emitters 530, such as processor 102 or 202, to selectively illuminate regions of the keyboard 120 using the light blocking layer 320-C of **Figure 10****.** The presence sensors of the light blocking layer 320-C, such as the capacitive detecting elements 1010 of the light blocking layer 320-C may communicate with the processor when the presence of an input element relative to the keyboard is detected; thereby allowing the processor to identify a region of the keyboard.

The capacitive detecting elements 1010 of the light blocking layer 320-C are positioned closer to the keys 310 than the capacitive detecting elements 910 of the circuitry layer 330-C. Since capacitance decreases as the distance from the source of capacitance increases, each of the capacitive detecting elements 1010 will have an enhanced sensitivity region compared to the capacitive detecting elements 910.

When the keyboard 120 utilizes either circuitry layer 330-C or light blocking layer 320-C, a capacitance due to an input element, such as a user's finger or capacitive stylus, is detectable at a capacitive detecting element 910 or 1010 (referred to as element 910 collectively) in a location of the keyboard 120. Each element 910 may be associated with a key or a group of keys of the keys 310 in proximity to the element, and may be used to identify a region of the keyboard at step 6002 of the method 6000 of **Figure 6****b.** The key or group of keys associated with the element 910 can then be illuminated individually using the plurality of discrete light emitters 530. Furthermore, a user may move their finger along the keys 310 of the keyboard 120 to input a gesture to the electronic device 100 coupled to the keyboard 120. When a user moves their finger along the keys 310 of the keyboard 120, the change in capacitance is detectable by the elements 910, thereby allowing for the processor 102, 202 to determine a movement vector associated with the movement of the finger along the keys 310. The key or group of keys associated with each element 910 can then be illuminated individually, producing a trail of light on the keys 310 following the user's finger.

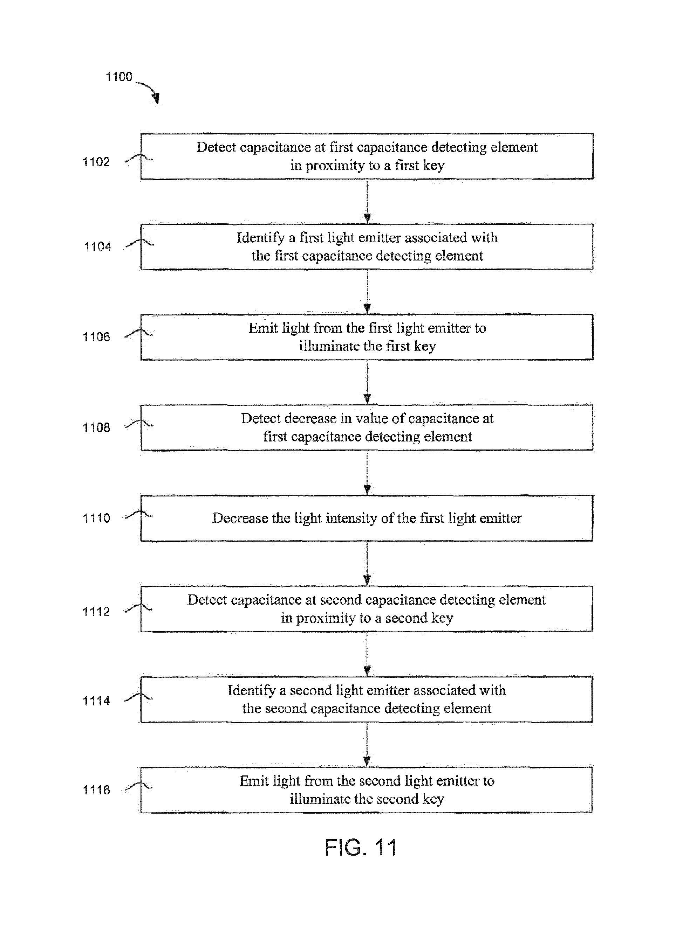

Reference is now made to **Figure 11****,** illustrating a flow chart of a method 1100 implemented by a processor 102, 202 (referred to as processor 102 collectively), of a electronic device 100 or an external keyboard 200 respectively, utilizing keyboard 120 with either circuitry layer 330-C or light blocking layer 320-C, and having instructions for implementing the method 1100 stored in memory, for example as part of illumination control software 182.

At 1102, the presence of an input element (for example a finger or stylus or other implement) is detected when a change in capacitance is detected at a location of the keyboard, such as at a first capacitance detecting element, of the elements 910, in proximity to a first key of the keys 310. The capacitance may be due to a user's touch, a capacitive stylus or other capacitive element being in the sensitivity region of the first capacitance detecting element. The first capacitance detecting element sends a signal to the processor 102 indicating that a capacitance has been detected. In some embodiments, the signal is first sent to an analog-to-digital converter (not shown) to determine a value of the capacitance.

The processor 102 then at 1104 identifies a first light emitter or a first group of light emitters, of the light emitters 530, associated with the first capacitance detecting element. The processor 102 for example may retrieve a look-up table stored in memory and identify the closest light emitter to the first capacitance detecting element. A group of light emitters may be identified when the sensitivity region of the first capacitance detecting element is larger than the region illuminated by a single light emitter.

At 1106, the processor 102 then sends a signal to the first light emitter or the first group of light emitters via the PCB 410 to turn on the first light emitter or the first group of light emitters, thereby selectively illuminating a first key or a first group of keys at the location of the keyboard where the presence of the input element was detected at 1102. A group of keys will be illuminated when each light emitter illuminates more than a single key, or when a group of light emitters are turned on.

In some embodiments, when the light emitter(s) is/are turned on, the processor 102 will also start a countdown timer and send control signals to the light emitter(s) to reduce the intensity of the light emitter(s) in dependence on time passed since detecting the presence at the location at 1102. For example, after a pre-determined number of seconds, the intensity of the light may be reduced. This allows for reduced power consumption when no additional inputs are received at the processor 102.

In some embodiments, the processor 102 sends control signals to the first light emitter or the first group of light emitters to slowly decrease the intensity of the light emitter(s) only after the capacitance detected at the first capacitance detecting element can no longer be detected.

In some embodiments, the processor 102 send control signals to the light emitter(s) to increase or decrease the intensity of the light emitter(s) in correspondence with the value of the capacitance detected at the first capacitance detecting element. At step 1108, the processor 102 detects a decrease in the capacitance at the first capacitance detecting element has occurred, thus at 1110, the processor 102 sends a command to the first light emitter(s) to decrease the light intensity.

When the user moves as input element, such as their finger or stylus, along the keys 310, at 1112 the capacitance will be detected at a second capacitance detecting element at a second location of the keyboard adjacent to the first capacitance detecting element in close proximity to a second key of the keys 310. However, when the user lifts their finger from the first key of the keys 310 and places it at the second key, at 1112 the capacitance will be detected at a second capacitance detecting element at any location of the keys 310.

The processor 102 then at 1114 identifies a second light emitter or a second group of light emitters, of the light emitters 530, associated with the second capacitance detecting element. At 1116, the processor 102 then sends a signal to the second light emitter(s) via the PCB 410 to turn on the second light emitter(s), thereby selectively illuminating the second key or group of keys at the second location of the keyboard.

Reference is now made to **Figure 12****,** showing a top plan view of keyboard 120, having a plurality of capacitance detecting elements 910, a plurality of discrete light emitters 530, and a plurality of keys 310 arranged in a QWERTY layout. The keyboard 120 is coupled to a processor 102 implementing method 1100 in real-time. In this embodiment, each capacitance detecting element 910 has a sensitivity region confided to only one key 310 and each discrete light emitter 530 illuminates only one key 310. Furthermore, each discrete light emitter 530 can be operated at varying light intensity levels.

In one embodiment, a user of the keyboard 120 swipes a finger from the Q key to the U key. Thus, a first capacitive detecting element C1 (not shown) detects a capacitance at the Q key, then a second capacitive detecting element C2 (not shown) detects a capacitance at the W key, then a third capacitive detecting element C3 (not shown) detects a capacitance at the E key, then a fourth capacitive detecting element C4 (not shown) detects a capacitance at the R key, then a fifth capacitive detecting element C5 (not shown) detects a capacitance at the T key, then a sixth capacitive detecting element C6 (not shown) detects a capacitance at the Y key, and then a capacitive detecting element C7 (not shown) detects a capacitance at the U key. As the instructions of method 1100 are implemented by the processor 102, the processor identifies the light emitters 530 corresponding with each of the capacitive detecting elements 910.

Furthermore, the processor 102 starts a timer when each capacitance is detected. In some embodiments, the processor 102 does not turn on light emitters 530 associated with capacitances detected at a time beyond a threshold. The threshold may be 10 seconds, 20 seconds, 30 seconds, 60 seconds or other threshold. By defining a threshold, the electronic device 100 is able to reduce power consumption. Additionally, the light from the light emitters 530 is typically only needed by the user of the electronic device 100 for a short time; thus it may no longer be needed if no inputs, including capacitance inputs, are detected.

Operating in real-time, the processor 102 assigns an intensity level to each light emitter 530 identified. The assigned intensity levels may change at regular intervals, for example, every second, every 100 milliseconds, every 10 milliseconds or other suitable time interval. The assigned intensity levels are stored in memory 120 or other memory and updated accordingly. An example memory state is shown in **Table 1,** corresponding to the time when the capacitance is detected at the seventh capacitive detecting element C7.

**Table 1**

| Capacitance Detecting Element | Corresponding Light Emitter | Corresponding Key | Time Since Capacitance Detected (s) | Intensity of Light Emitter (%) |
|---|---|---|---|---|
| C7 | E7 | U | 0 | 100 |
| C6 | E6 | Y | 1 | 95 |
| C5 | E5 | T | 2 | 90 |
| C4 | E4 | R | 3 | 85 |
| C3 | E3 | E | 4 | 80 |
| C2 | E2 | W | 5 | 75 |
| C1 | E1 | Q | 6 | 70 |

**Table 1** illustrates the user's swiping motion from the Q key to the U key, as detected by the processor 102. The first capacitance detecting element C1 detects the capacitance first, 6 seconds ago, and the seventh capacitance detecting element C7 detects the capacitance last, 0 seconds ago. The processor 102 thus assigns intensity levels varying from 100% to the light emitter 530 associated with the U key to 70% to the light emitter 530 associated with the Q key. In some embodiments, the light emitter 530 associated with each of the keys is assigned 100% intensity level when the capacitance is first detected; i.e. the time is 0 seconds. In some embodiments, the assigned intensity level for each light emitter 530 is decreased by a value at a regular interval. In the example of Table 1, the light intensity is decreased by 5% each second. This creates a trailing effect using the light emitters 530 of the keyboard 120. As the user moves their finger along the keys 310, and the detected location of the user's touch is updated by the processor 102, the light from the light emitters 530 will trail the user's touch.

In some example embodiments, the light intensity of illuminated light emitters 530 may further be controlled (for example, set or adjusted) by the processor 102 in dependence on (that is, as a function of or in response to) ambient light conditions as detected by a light sensor 166 of the device 100, 200. For example, lower intensity light could be emitted in darker ambient light conditions and higher intensity light emitted in higher ambient light conditions. The processor 102, as a function of one or more signals communicated from the light sensor 166, may control the intensity.

Certain adaptations and modifications of the described embodiments can be made. Therefore, the above discussed embodiments are considered to be illustrative and not restrictive.

In at least some example embodiments, the combination of discrete lighting elements that work in conjunction with a reflective surface to illuminate a keyboard can facilitate efficient selective lighting of keyboard regions. Selective illumination may be under the control of the processor 102. By illuminating some of the light emitters but not others, the processor may effectively illuminate one or more parts of the keyboard or selective keys or groups of keys, but not others. In some embodiments, selective illumination may help reduce power usage or reduce device size, which are of particular importance in the context of mobile and handheld electronic devices. In at least some example embodiments, the combination of discrete lighting elements that work in conjunction with a reflective surface to illuminate a keyboard can eliminate or reduce the requirement for light guides in the keyboard, thereby reducing components of the device to reduce one or more of device size, keyboard thickness and manufacturing cost. In some other embodiments, selective illumination may be used in conjunction with detection of input elements as described above, by selectively illuminating the regions of the keyboard that are proximate to or that correspond to locations at which the sensors detect the presence of an input element.

The steps and/or operations in the flowcharts and drawings described herein are for purposes of example only. There may be many variations to these steps and/or operations without departing from the teachings of the present disclosure. For instance, the steps may be performed in a differing order, or steps may be added, deleted, or modified.

Implementation of one or more embodiments may result in one or more benefits, some of which have been mentioned already. Although the techniques described herein may be applied to a single key, they may be especially useful with keyboards in which a plurality of keys is to be illuminated. The keys may also be illuminated in an evenly and uniformly, which may enhance visibility, readability, aesthetics and other desirable qualities. Further, the keys may be illuminated in an efficient manner, from a standpoint of size, weight, energy, or any combination thereof. Many of the embodiments may be implemented with small components that contribute little or no additional size or weight to a portable electronic device. Considerations of size and weight can be especially important for handheld devices.

While the present disclosure is described, at least in part, in terms of methods, a person of ordinary skill in the art will understand that the present disclosure is also directed to the various components for performing at least some of the aspects and features of the described methods, be it by way of hardware components, software or any combination of the two, or in any other manner. Moreover, the present disclosure is also directed to a pre-recorded storage device or other similar computer readable medium including program instructions stored thereon for performing the methods described herein.

The present disclosure may be embodied in other specific forms without departing from the subject matter of the claims. The described example embodiments are to be considered in all respects as being only illustrative and not restrictive. The present disclosure intends to cover and embrace all suitable changes in technology. The scope of the present disclosure is, therefore, described by the appended claims rather than by the foregoing description. The scope of the claims should not be limited by the described embodiments set forth in the examples, but should be given the broadest interpretation consistent with the description as a whole.

## Claims

1. A portable electronic device (100), comprising:
a plurality of user input keys (310) arranged to form a keyboard (120);
a reflective surface (332) spaced apart from the keys; and
a plurality of light emitters (530) located between the keys and the reflective surface, the light emitters being configured to emit light towards the reflective surface for reflection towards the input keys.

2. The device of claim 1 comprising a processor (102) operatively connected to the plurality of light emitters and configured to selectively control the light emitters to selectively illuminate regions of the keyboard.

3. The device of claim 2 comprising one or more sensors (910, 1010) communicating with the processor configured to detect a presence of an input element relative to keyboard, the processor being configured to selectively control the light emitters to selectively illuminate regions of the keyboard that correspond to locations at which the sensors detect the presence of the input element.

4. The device of claim 3 wherein the one or more sensors include capacitive detecting elements (910, 1010) located proximate to the keyboard.

5. The device of any one of claims 2 to 4, further comprising a light sensor (166) communicating with the processor, wherein the processor is configured to selectively control the light intensity of light emitted by the light emitters in dependence on ambient light conditions as detected by the light sensor.

6. The device of any one of claims 1 to 5, comprising a light blocking layer located between the keys and the reflective surface, the light blocking layer having a plurality of apertures (520).

7. The device of claim 6 the light blocking layer having a first side facing the reflective surface, wherein the plurality of light emitters are disposed on the first side of the light blocking layer.

8. The device of claim 7 wherein the reflected light from the light emitters is reflected in the direction of the keys through one or more apertures of the plurality of apertures.

9. The device of any one of claims 1 to 8, wherein the reflecting surface is formed on a reflective layer having an uneven surface, the reflective surface covering a plurality of resilient reflective projections (620), each projection corresponding to a key of the keyboard.

10. The device of any one of claims 1 to 9, comprising a plurality of capacitive detecting elements disposed below the keys.

11. A method (1100) of illuminating a keyboard (120) of a portable electronic device (102) that comprises a plurality of user input keys (310) arranged to form a keyboard, a reflective surface (322) spaced apart from the keys, and a plurality of light emitters (530) located between the keys and the reflective surface, comprising controlling (1106) the light emitters to emit light towards the reflective surface (650), and reflecting (662) the light from the reflective surface towards the input keys.

12. The method of claim 11 comprising selectively controlling the light emitters to selectively illuminate regions of the keyboard.

13. The method of any one of claim 11 and claim 12, wherein the device comprises one or more sensors (910, 1010) for detecting a presence of an input element relative to keyboard, the method comprising:
detecting (1102) through the one or more sensors a presence of an input element in a location of the keyboard, and wherein selectively controlling the light emitters to selectively (1106) illuminate regions of the keyboard comprises controlling one or more of the light emitters to selectively illuminate the keyboard at the location.

14. The method of claim 13 comprising reducing (1110) an intensity of the one or more light emitters illuminating the location in dependence on time passed since detecting the presence at the location.

15. The method of claim 13 wherein the one or more sensors include capacitive detecting elements located proximate the keyboard.
